(19) Europäisches Patentamt
European Patent Office
Office européen des brevets

(11) **EP 3 154 351 B1**

(12) **EUROPEAN PATENT SPECIFICATION**

(45) Date of publication and mention
of the grant of the patent:
**15.08.2018   Bulletin 2018/33**

(51) Int Cl.:
*A01P 3/00* *(2006.01)*     *A01N 37/52* *(2006.01)*
*A01N 43/56* *(2006.01)*     *A01N 43/30* *(2006.01)*
*A01N 43/653* *(2006.01)*    *A01N 25/00* *(2006.01)*

(21) Application number: **15726203.1**

(22) Date of filing: **08.06.2015**

(86) International application number:
**PCT/EP2015/062640**

(87) International publication number:
**WO 2015/189110 (17.12.2015 Gazette 2015/50)**

(54) **ACTIVE COMPOUND COMBINATIONS COMPRISING CYFLUFENAMID AND SPIROXAMINE**

AKTIVE VERBINDUNGSKOMBINATIONEN MIT CYFLUFENAMID UND SPIROXAMIN

COMBINAISONS DE COMPOSÉS ACTIFS COMPRENANT DU CYFLUFÉNAMIDE ET DE LA SPIROXAMINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2014   EP 14172044**

(43) Date of publication of application:
**19.04.2017   Bulletin 2017/16**

(73) Proprietor: **Bayer CropScience Aktiengesellschaft**
**40789 Monheim am Rhein (DE)**

(72) Inventors:
 • **GÖHLICH, Frank**
   **40789 Monheim am Rhein (DE)**
 • **KRIEG, Ulrich**
   **51381 Leverkusen (DE)**
 • **DAHMEN, Peter**
   **41470 Neuss (DE)**
 • **GÖRTZ, Andreas**
   **41541 Dormagen (DE)**

(74) Representative: **BIP Patents**
**c/o Bayer Intellectual Property GmbH**
**Alfred-Nobel-Straße 10**
**40789 Monheim am Rhein (DE)**

(56) References cited:
**EP-A1- 2 465 350       EP-A1- 2 612 554**
**WO-A1-2007/031507**

 • **DATABASE WPI Week 201228 Thomson Scientific, London, GB; AN 2012-B45492 XP002741900, -& CN 102 308 808 A (HAILIR PESTICIDES&CHEM CO LTD) 11 January 2012 (2012-01-11)**
 • **"Advantageous combinations of proquinazid and cyflufenamid for control of powdery mildew diseases of cereals, grapes and other plants", RESEARCH DISCLOSURE, MASON PUBLICATIONS, HAMPSHIRE, GB, vol. 515, no. 22, 1 March 2007 (2007-03-01), page 251, XP007137139, ISSN: 0374-4353**

**Description**

The invention relates to active compound combinations, in particular within a fungicide composition, which comprises (A) cyflufenamid and (B) spiroxamine. Cyflufenamid, having the chemical name (Z)-N-[α-(cyclopropylmethoxyimino)-2,3-difluoro-6-(trifluoromethyl)benzyl]-2-phenylacetamide (Compound A) and its manufacturing process starting from known and commercially available compounds is described in EP 805 148 A1.

Bixafen, having the chemical name N-(3',4'-dichloro-5-fluoro-1,1'-biphenyl-2-yl)-3-(difluoromethyl)-1-methyl-1H-pyrazole-4-carboxamide (Compound B) and its manufacturing process starting from known and commercially available compounds is described in WO-A 03/070705.

Spiroxamine, having the chemical name 8-tert-butyl-1,4-dioxaspiro[4.5]decan-2-ylmethyl(ethyl)(propyl)amine 8-(1,1-dimethylethyl)-N-ethyl-N-propyl-1,4-dioxaspiro[4.5]decane-2-methanamine (Compound B) and its manufacturing process starting from known and commercially available compounds is described in EP-A 0 281 842.

Prothioconazole, having the chemical name 2-[2-(1-chlorocyclopropyl)-3-(2-chlorophenyl)-2-hydroxypropyl]-1,2-dihydro-3H- 1,2,4-triazole-3-thione (Compound C) and its manufacturing process starting from known and commercially available compounds is described in WO-A 96/16048.

Active compound combinations comprising bixafen and further fungicides are disclosed in WO-A 2005/034628 and WO-A 2007/110173. Active compound combinations comprising spiroxamine and further fungicides are disclosed in EP-A 0 627 163, EP-A 0 833 561, EP-A 0 831 702, and WO-A 01/37666. Active compound combinations comprising prothioconazole and further fungicides are disclosed in WO-A 98/47367, WO-A 03/073850, WO-A 03/073851, and WO-A 03/073852. Active compound combinations comprising cyflufenamid and further fungicides are disclosed in EP 805 148 A1. However, neither of the prior art references teaches to combine cyflufenamid and spiroxamine. CN 102 308 808 discloses a fungicidal composition comprising cyflufenamid and prothioconazole in a weight ratio of 90:1 to 1:90, preferably of 60:3 to 2:70. The composition exhibits a synergistic effect in the treatment of powdery mildew in grapes.

In the article "Advantageous combinations of proquinazid and cyflufenamid for control of powdery mildew diseases of cereals, grapes and other plants" (RESEARCH DISCLOSURE, MASON PUBLICATIONS, HAMPSHIRE, GB, vol. 515, no. 22, 1 March 2007 (2007-03-01), page 251) a combination of proquinazid and cyflufenamid for powdery mildew control has been disclosed. However, this article also neither discloses nor teaches to combine cyflufenamid and spiroxamine.

Since the environmental and economic requirements imposed on modern-day fungicides are continually increasing, with regard, for example, to the spectrum of action, toxicity, selectivity, application rate, formation of residues, and favorable preparation ability, and since, furthermore, there may be problems, for example, with resistances, a constant task is to develop new fungicide agents which in some areas at least have advantages over their known counterparts. The invention provides active compound combinations or compositions which in some aspects at least achieve the stated objectives. Surprisingly, the active compound combinations according to the present invention provide a broader spectrum of action and reduced application rates.

It has additionally been found, surprisingly, that the combinations or compositions according to the invention not only bring about the additive enhancement of the spectrum of action with respect to the phytopathogens to be controlled that was in principle to be expected but achieves a synergistic effect which extends the range of action of the component (A) and of the component (B) in two ways. The rates of application of the component (A) and of the component (B) are lowered whilst the action remains equally good.

However, besides the actual synergistic action with respect to fungicidal activity, the fungicidal combinations according to the invention also have further surprising advantageous properties which can also be described, in a wider sense, as synergistic activity. Examples of such advantageous properties that may be mentioned are: a broadening of the spectrum of fungicidal activity to other phytopathogens, for example to resistant strains; a reduction in the rate of application of the active ingredients; adequate fungicidal control with the aid of the compositions according to the invention, even at a rate of application at which the individual compounds are less effective or totally ineffective; advantageous behavior during formulation or upon application, for example upon grinding, sieving, emulsifying, dissolving or dispensing; increased storage stability; improved stability to light; more advantageous degradability; improved toxicological or ecotoxicological behavior; improved characteristics of the useful plants including: emergence, crop yields, more developed root system, tillering increase, increase in plant height, bigger leaf blade, less dead basal leaves, stronger tillers, greener leaf color, less fertilizers needed, less seeds needed, more productive tillers, earlier flowering, early grain maturity, less plant verse (lodging), increased shoot growth, improved plant vigor, and early germination; or any other advantages familiar to a person skilled in the art.

The combination according to the invention can also provide an improved systemicity to the active compounds that are used. Indeed, even if some of the used fungicide compounds do not possess any or a satisfying systemicity, within the composition according to the invention these compounds can exhibit such a property.

Furthermore and preferably, the active compound combination according to the present invention allows excellent powdery mildew control.

In a similar manner, the combination according to the invention can allow an increased persistence of the fungicide efficacy of the active compounds that are employed.

Another advantage of the combination according to the invention relies in that an increased curativity is achievable.

Accordingly, the present invention provides an active compound combination comprising:

(A) cyflufenamid and

(B) spiroxamine

wherein the weight ratio of A:B from 1:10 to 1:30.

The active compound combinations according to the present invention do not comprise proquinazid.

In particular this invention provides an active compound combination consisting of (A) cyflufenamid and (B) spiroxamine and suitable adjuvants, solvents, carrier, surfactants or extenders.

In the combinations according to the invention the compounds (A) and (B) are present in a synergistically effective weight ratio of A:B or A:C or B:C.

In preferred embodiments of the invention wherein (B) is represented by spiroxamine the weight ratio of A:B is from 1:1 to 1:28, preferably from 1:5 to 1:25, more preferably from 1:10 to 1:22.

Where a compound (A) or a compound (B) can be present in tautomeric form, such a compound is understood hereinabove and hereinbelow also to include, where applicable, corresponding tautomeric forms, even when these are not specifically mentioned in each case.

Compounds (A) or compounds (B) having at least one basic centre are capable of forming, for example, acid addition salts, e.g. with strong inorganic acids, such as mineral acids, e.g. perchloric acid, sulfuric acid, nitric acid, nitrous acid, a phosphoric acid, a hydrohalic acid, such as hydrogen fluoride, hydrogen chloride, hydrogen bromide and hydrogen iodide, or acidic salts, such as $NaHSO_4$ and $KHSO_4$, with strong organic acids, formic acid, carbonic acid and alkanoic acids, such as acetic acid, trifluoroacetic acid, trichloroacetic acid and propionic acid, and also glycolic acid, thiocyanic acid, lactic acid, succinic acid, citric acid, benzoic acid, cinnamic acid, maleic acid, fumaric acid, tartaric acid, sorbic acid oxalic acid, alkylsulphonic acids (sulphonic acids having straight-chain or branched alkyl radicals of 1 to 20 carbon atoms), arylsulphonic acids or aryldisulphonic acids (aromatic radicals, such as phenyl and naphthyl, which carry one or two sulphonic acid groups), alkylphosphonic acids (phosphonic acids having straight-chain or branched alkyl radicals of 1 to 20 carbon atoms), arylphosphonic acids or aryldiphosphonic acids (aromatic radicals, such as phenyl and naphthyl, which carry one or two phosphonic acid radicals), where the alkyl and aryl radicals may carry further substituents, for example p-toluenesulphonic acid, 1,5-naphthalenedisulphonic acid, salicylic acid, p-aminosalicylic acid, 2-phenoxybenzoic acid, 2-acetoxybenzoic acid, etc.. Compounds (A) or compounds (B) having at least one acid group are capable of forming, for example, salts with bases, e.g. metal salts, such as alkali metal or alkaline earth metal salts, e.g. sodium, potassium or magnesium salts, or salts with ammonia or an organic amine, such as morpholine, piperidine, pyrrolidine, a mono-, di- or tri-lower alkylamine, e.g. ethyl-, diethyl-, triethyl- or dimethyl-propyl-amine, or a mono-, di- or tri-hydroxy-lower alkylamine, e.g. mono-, di- or triethanolamine. In addition, corresponding internal salts may optionally be formed. In the context of the invention, preference is given to agrochemically advantageous salts. In view of the close relationship between the compounds (A) or the compounds (B) in free form and in the form of their salts, hereinabove and herein below any reference to the free compounds (A) or free compounds (B) or to their salts should be understood as including also the corresponding salts or the free compounds (A) or free compounds (B), respectively, where appropriate and expedient. The equivalent also applies to tautomers of compounds (A) or compounds (B) and to their salts.

According to the invention the expression "combination" stands for the various combinations of compounds (A) and (B), for example in a single "ready-mix" form, in a combined spray mixture composed from separate formulations of the single active compounds, such as a "tank-mix", and in a combined use of the single active ingredients when applied in a sequential manner, i.e. one after the other within a reasonably short period, such as a few hours or days. Preferably the order of applying the compounds (A) and (B) is not essential for working the present invention.

In a further aspect, there is provided a composition comprising a combination according to this invention. Preferably the fungicidal composition comprises an agriculturally acceptable support, carrier or filler.

According to the invention, the term "support" denotes a natural or synthetic, organic or inorganic compound with which the active compound (A) and (B) is combined or associated to make it easier to apply, notably to the parts of the plant. This support is thus generally inert and should be agriculturally acceptable. The support may be a solid or a liquid. Examples of suitable supports include clays, natural or synthetic silicates, silica, resins, waxes, solid fertilisers, water, alcohols, in particular butanol, organic solvents, mineral and plant oils and derivatives thereof. Mixtures of such supports may also be used.

The composition according to the invention may also comprise additional components. In particular, the composition may further comprise a surfactant. The surfactant can be an emulsifier, a dispersing agent or a wetting agent of ionic or non-ionic type or a mixture of such surfactants. Mention may be made, for example, of polyacrylic acid salts, lignosulphonic acid salts, phenolsulphonic or naphthalenesulphonic acid salts, polycondensates of ethylene oxide with fatty alcohols or with fatty acids or with fatty amines, substituted phenols (in particular alkylphenols or arylphenols), salts of sulphosuccinic acid esters, taurine derivatives (in particular alkyl taurates), phosphoric esters of polyoxyethylated alcohols or phenols, fatty acid esters of polyols, and derivatives of the present compounds containing sulphate, sulphonate and phosphate functions. The presence of at least one surfactant is generally essential when the active compound and / or the inert support are water-insoluble and when the vector agent for the application is water. Preferably, surfactant content may be comprised from 5% to 40% by weight of the composition.

Colouring agents such as inorganic pigments, for example iron oxide, titanium oxide, ferrocyanblue, and organic pigments such as alizarin, azo and metallophthalocyanine dyes, and trace elements such as iron, manganese, boron, copper, cobalt, molybdenum and zinc salts can be used.

Optionally, other additional components may also be included, e.g. protective colloids, adhesives, thickeners, thixotropic agents, penetration agents, stabilisers, sequestering agents. More generally, the active compounds can be combined with any solid or liquid additive, which complies with the usual formulation techniques.

In general, the composition according to the invention may contain from 0.05 to 99% by weight of active compounds, preferably from 10 to 70% by weight.

The combination or composition according to the invention can be used as such, in form of their formulations or as the use forms prepared therefrom, such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ULV) liquid, ultra low volume (ULV) suspension, water dispersible granules or tablets, water dispersible powder for slurry treatment, water soluble granules or tablets, water soluble powder for seed treatment and wettable powder.

The treatment of plants and plant parts with the active compound combination according to the invention is carried out directly or by action on their environment, habitat or storage area by means of the normal treatment methods, for example by watering (drenching), drip irrigation, spraying, atomizing, broadcasting, dusting, foaming, spreading-on, and as a powder for dry seed treatment, a solution for seed treatment, a water-soluble powder for seed treatment, a water-soluble powder for slurry treatment, or by encrusting.

These combinations or compositions include not only compositions which are ready to be applied to the plant or seed to be treated by means of a suitable device, such as a spraying or dusting device, but also concentrated commercial compositions which must be diluted before application to the crop.

The active compounds within the combinations or compositions according to the invention have potent microbicide activity and can be employed for controlling undesired micro-organisms, such as fungi or bacteria, in crop protection or in the protection of materials.

Within the combinations or compositions according to the invention, fungicide compounds can be employed in crop protection for example for controlling Plasmodiophoromycetes, Oomycetes, Chytridiomycetes, Zygomycetes, Ascomycetes, Basidiomycetes and Deuteromycetes.

The fungicide combinations or compositions according to the invention can be used to curatively or preventively control the phytopathogenic fungi of plants or crops. The combinations or composition of the invention is also suitable for the treatment of seeds. A large part of the damage caused by diseases on cultigens occurs by infestation of the seed during storage and after sowing the seed in the ground as well as during and after germination of the plants. This phase is especially critical since the roots and shoots of the growing plant are particularly sensitive and even a small amount of damage can lead to withering of the whole plant.

The method of treatment using combinations or compositions according to the invention may also be useful to treat propagation material such as tubers or rhizomes, but also seeds, seedlings or seedlings pricking out and plants or plants pricking out. This method of treatment can also be useful to treat roots. The method of treatment using combinations or compositions according to the invention can also be useful to treat the over-ground parts of the plant such as trunks, stems or stalks, leaves, flowers and fruit of the concerned plant.

Plants which can be treated with the combination or compositions the invention include the following main crop plants: maize, soya bean, alfalfa, cotton, sunflower, *Brassica* oil seeds such as *Brassica napus* (e.g. canola, rapeseed), *Brassica rapa, B. juncea* (e.g. (field) mustard) and *Brassica carinata, Arecaceae sp.* (e.g. oilpalm, coconut), rice, wheat, sugar beet, sugar cane, oats, rye, barley, millet and sorghum, triticale, flax, nuts, grapes and vine and various fruit and vegetables from various botanic taxa, e.g. *Rosaceae sp.* (e.g. pome fruits such as apples and pears, but also stone fruits such as apricots, cherries, almonds, plums and peaches, and berry fruits such as strawberries, raspberries, red and black currant and gooseberry), *Ribesioidae sp., Juglandaceae sp., Betulaceae sp., Anacardiaceae sp., Fagaceae sp., Moraceae sp., Oleaceae sp.* (e.g. olive tree), *Actinidaceae sp., Lauraceae sp.* (e.g. avocado, cinnamon, camphor), *Musaceae sp.* (e.g. banana trees and plantations), *Rubiaceae sp.* (e.g. coffee), *Theaceae sp.* (e.g. tea), *Sterculiceae*

*sp., Rutaceae sp.* (e.g. lemons, oranges, mandarins and grapefruit); *Solanaceae sp.* (e.g. tomatoes, potatoes, peppers, capsicum, aubergines, tobacco), *Liliaceae sp., Compositae sp.* (e.g. lettuce, artichokes and chicory - including root chicory, endive or common chicory), *Umbelliferae sp.* (e.g. carrots, parsley, celery and celeriac), *Cucurbitaceae sp.* (e.g. cucumbers - including gherkins, pumpkins, watermelons, calabashes and melons), *Alliaceae sp.* (e.g. leeks and onions), *Cruciferae sp.* (e.g. white cabbage, red cabbage, broccoli, cauliflower, Brussels sprouts, pak choi, kohlrabi, radishes, horseradish, cress and chinese cabbage), *Leguminosae sp.* (e.g. peanuts, peas, lentils and beans - e.g. common beans and broad beans), *Chenopodiaceae sp.* (e.g. Swiss chard, fodder beet, spinach, beetroot), *Linaceae sp.* (e.g. hemp), *Cannabeacea sp.* (e.g. cannabis), *Malvaceae sp.* (e.g. okra, cocoa), *Papaveraceae* (e.g. poppy), *Asparagaceae* (e.g. asparagus); useful plants and ornamental plants in the garden and woods including turf, lawn, grass and *Stevia rebaudiana;* and in each case genetically modified types of these plants.

Preferably plants which can be treated with the combination or compositions the invention include cereals such as wheat, rye, barley and triticale, *Cucurbitaceae sp.* (e.g. cucumbers - including gherkins, pumpkins, watermelons, calabashes and melons), *Solanaceae sp.* (e.g. tomatoes, peppers, capsicum, aubergines), *Rosaceae sp.* (e.g. pome fruits such as apples and pears, but also berry fruits such as strawberries), *Compositae sp.* (e.g. lettuce, artichokes and chicory - including root chicory, endive or common chicory), *Umbelliferae sp.* (e.g. carrots, parsley, celery and celeriac), *Cucurbitaceae sp.* (e.g. cucumbers - including gherkins, pumpkins, watermelons, calabashes and melons), *Alliaceae sp.* (e.g. leeks and onions), *Cruciferae sp.* (e.g. white cabbage, red cabbage, broccoli, cauliflower, Brussels sprouts, pak choi, kohlrabi, radishes, horseradish, cress and chinese cabbage), *Leguminosae sp.* (e.g. peanuts, peas, lentils and beans - e.g. common beans and broad beans), soya bean, grapes and vine, sugar beet and cutflowers.

In a preferred embodiment of the present application preferred plants which can be treated with an active compound combination comprising (A) cyflufenamid and (B) spiroxamine include cereals such as wheat, rye, barley and triticale, *Cucurbitaceae sp.* (e.g. cucumbers - including gherkins, pumpkins, watermelons, calabashes and melons), *Solanaceae sp.* (e.g. tomatoes, peppers, capsicum, aubergines), *Rosaceae sp.* (e.g. pome fruits such as apples and pears, but also berry fruits such as strawberries), *Compositae sp.* (e.g. lettuce, artichokes and chicory - including root chicory, endive or common chicory), *Umbelliferae sp.* (e.g. carrots, parsley, celery and celeriac), *Cucurbitaceae sp.* (e.g. cucumbers - including gherkins, pumpkins, watermelons, calabashes and melons), *Alliaceae sp.* (e.g. leeks and onions), *Cruciferae sp.* (e.g. white cabbage, red cabbage, broccoli, cauliflower, Brussels sprouts, pak choi, kohlrabi, radishes, horseradish, cress and chinese cabbage), *Leguminosae sp.* (e.g. peanuts, peas, lentils and beans - e.g. common beans and broad beans), soya bean, grapes and vine, sugar beet and cutflowers.

In a preferred embodiment of the present application preferred plants which can be treated with an active compound combination comprising (A) cyflufenamid and (B) spiroxamine and (C) prothioconazole include cereals such as wheat, rye, barley and triticale.

The method of treatment using combinations or compositions according to the invention can be used in the treatment of genetically modified organisms, e.g. plants or seeds. Genetically modified plants are plants of which a heterologous gene encoding a protein of interest has been stably integrated into genome. The expression "heterologous gene encoding a protein of interest" essentially means genes which give the transformed plant new agronomic properties, or genes for improving the agronomic quality of the modified plant.

The method using combinations or compositions according to the invention for controlling unwanted fungi can also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, can be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The active ingredients may prevent adverse effects, such as rotting, decay, discoloration, discoloration or formation of mould. Preferably "storage goods" is understood to denote natural substances of vegetable origin and their processed forms, more preferably fruits and their processed forms, such as pomes, stone fruits, soft fruits and citrus fruits and their processed forms. Examples of pathogens of fungal diseases which can be treated in accordance with the invention include:

diseases caused by powdery mildew pathogens, for example *Blumeria* species, for example *Blumeria* graminis; *Podosphaera* species, for example *Podosphaera leucotricha; Sphaerotheca* species, for example *Sphaerotheca fuliginea; Uncinula* species, for example *Uncinula necator; Microsphaera* species, for example *Microsphaera diffusa; Leveillula species,* for example *Leveillula taurica; Erysiphe* species, for example *Erysiphe cichoracearum;*

diseases caused by rust disease pathogens, for example *Gymnosporangium* species, for example *Gymnosporangium sabinae; Hemileia* species, for example *Hemileia vastatrix; Phakopsora* species, for example *Phakopsora pachyrhizi* and *Phakopsora meibomiae; Puccinia* species, for example *Puccinia recondite, P. triticina, P. graminis* or *P. striiformis; Uromyces* species, for example *Uromyces appendiculatus;*

diseases caused by pathogens from the group of the *Oomycetes,* for example *Albugo* species, for example *Algubo candida; Bremia* species, for example *Bremia lactucae; Peronospora* species, for example *Peronospora pisi* or *P. brassicae;* Phytophthora species, for example *Phytophthora infestans; Plasmopara* species, for example *Plasmopara viticola; Pseudoperonospora* species, for example *Pseudoperonospora humuli* or *Pseudoperonospora cubensis;* Pythium species, for example *Pythium ultimum;*

leaf blotch diseases and leaf wilt diseases caused, for example, by *Alternaria* species, for example *Alternaria solani; Cercospora* species, for example *Cercospora beticola; Cladiosporium* species, for example *Cladiosporium cucumerinum; Cochliobolus* species, for example *Cochliobolus sativus* (conidia form: Drechslera, Syn: Helminthosporium), *Cochliobolus miyabeanus; Colletotrichum* species, for example *Colletotrichum lindemuthanium; Cycloconium* species, for example *Cycloconium oleaginum; Diaporthe* species, for example *Diaporthe citri; Elsinoe* species, for example *Elsinoe fawcettii; Gloeosporium* species, for example *Gloeosporium laeticolor; Glomerella* species, for example *Glomerella cingulata; Guignardia* species, for example *Guignardia bidwelli; Leptosphaeria* species, for example *Leptosphaeria maculans, Leptosphaeria nodorum; Magnaporthe* species, for example *Magnaporthe grisea; Marssonia* species, for example *Marssonia coronaria; Microdochium* species, for example *Microdochium nivale; Mycosphaerella* species, for example *Mycosphaerella graminicola, M. arachidicola* and *M. fijiensis; Phaeosphaeria* species, for example *Phaeosphaeria nodorum; Pyrenophora* species, for example *Pyrenophora teres, Pyrenophora tritici repentis; Ramularia* species, for example *Ramularia collo-cygni, Ramularia areola; Rhynchosporium* species, for example *Rhynchosporium secalis; Septoria* species, for example *Septoria apii, Septoria lycopersii; Typhula* species, for example *Typhula incarnata; Venturia* species, for example *Venturia inaequalis;* root and stem diseases caused, for example, by *Corticium* species, for example *Corticium graminearum; Fusarium* species, for example *Fusarium oxysporum; Gaeumannomyces* species, for example *Gaeumannomyces graminis; Rhizoctonia* species, such as, for example *Rhizoctonia solani; Sarocladium* diseases caused for example by *Sarocladium oryzae; Sclerotium* diseases caused for example by *Sclerotium oryzae; Tapesia* species, for example *Tapesia acuformis; Thielaviopsis* species, for example *Thielaviopsis basicola;*

ear and panicle diseases (including corn cobs) caused, for example, by *Alternaria* species, for example *Alternaria* spp.; *Aspergillus* species, for example *Aspergillus flavus; Cladosporium* species, for example *Cladosporium cladosporioides; Claviceps* species, for example *Claviceps purpurea; Fusarium* species, for example *Fusarium culmorum; Gibberella* species, for example *Gibberella zeae; Monographella* species, for example *Monographella nivalis; Septoria* species, for example *Septoria nodorum;*

diseases caused by smut fungi, for example *Sphacelotheca* species, for example *Sphacelotheca reiliana; Tilletia* species, for example *Tilletia caries, T. controversa; Urocystis* species, for example *Urocystis occulta; Ustilago* species, for example *Ustilago nuda, U. nuda tritici;*

fruit rot caused, for example, by *Aspergillus* species, for example *Aspergillus flavus; Botrytis* species, for example *Botrytis cinerea; Penicillium* species, for example *Penicillium expansum* and *P. purpurogenum; Sclerotinia* species, for example *Sclerotinia sclerotiorum; Verticilium* species, for example *Verticilium alboatrum;*

seed and soilborne decay, mould, wilt, rot and damping-off diseases caused, for example, by *Alternaria* species, caused for example by *Alternaria brassicicola; Aphanomyces* species, caused for example by *Aphanomyces euteiches; Ascochyta* species, caused for example by *Ascochyta lentis; Aspergillus* species, caused for example by *Aspergillus flavus; Cladosporium* species, caused for example by *Cladosporium herbarum; Cochliobolus* species, caused for example by *Cochliobolus sativus;* (Conidiaform: Drechslera, Bipolaris Syn: Helminthosporium); *Colletotrichum* species, caused for example by *Colletotrichum coccodes; Fusarium* species, caused for example by *Fusarium culmorum; Gibberella* species, caused for example by *Gibberella zeae; Macrophomina* species, caused for example by *Macrophomina phaseolina; Monographella* species, caused for example by *Monographella nivalis; Penicillium* species, caused for example by *Penicillium expansum; Phoma* species, caused for example by *Phoma lingam; Phomopsis* species, caused for example by *Phomopsis sojae; Phytophthora* species, caused for example by *Phytophthora cactorum; Pyrenophora* species, caused for example by *Pyrenophora graminea; Pyricularia* species, caused for example by *Pyricularia oryzae; Pythium* species, caused for example by *Pythium ultimum; Rhizoctonia* species, caused for example by *Rhizoctonia solani; Rhizopus* species, caused for example by *Rhizopus oryzae; Sclerotium* species, caused for example by *Sclerotium rolfsii; Septoria* species, caused for example by *Septoria nodorum; Typhula* species, caused for example by *Typhula incarnata; Verticillium* species, caused for example by *Verticillium dahliae;*

cancers, galls and witches' broom caused, for example, by *Nectria* species, for example *Nectria galligena;*

wilt diseases caused, for example, by *Monilinia* species, for example *Monilinia laxa;*

leaf blister or leaf curl diseases caused, for example, by *Exobasidium* species, for example *Exobasidium vexans;*

*Taphrina* species, for example *Taphrina deformans;*

decline diseases of wooden plants caused, for example, by Esca disease, caused for example by *Phaemoniella clamydospora, Phaeoacremonium aleophilum* and *Fomitiporia mediterranea;* Eutypa dyeback, caused for example by *Eutypa lata* ; Ganoderma diseases caused for example by *Ganoderma boninense;* Rigidoporus diseases caused for example by *Rigidoporus lignosus;*

diseases of flowers and seeds caused, for example, by *Botrytis* species, for example *Botrytis cinerea;*

diseases of plant tubers caused, for example, by *Rhizoctonia* species, for example *Rhizoctonia solani; Helminthosporium* species, for example *Helminthosporium solani;*

Club root caused, for example, by *Plasmodiophora* species, for example *Plamodiophora brassicae;*

diseases caused by bacterial pathogens, for example *Xanthomonas* species, for example *Xanthomonas campestris pv. oryzae; Pseudomonas* species, for example *Pseudomonas syringae pv. lachrymans; Erwinia* species, for example *Erwinia amylovora.*

The following diseases of soya beans can be controlled with preference:
Fungal diseases on leaves, stems, pods and seeds caused, for example, by *Alternaria* leaf spot *(Alternaria spec. atrans tenuissima)*, Anthracnose *(Colletotrichum gloeosporoides dematium var. truncatum)*, brown spot *(Septoria glycines)*, cercospora leaf spot and blight *(Cercospora kikuchii)*, choanephora leaf blight *(Choanephora infundibulifera trispora* (Syn.)), dactuliophora leaf spot *(Dactuliophora glycines)*, downy mildew *(Peronospora manshurica)*, drechslera blight *(Drechslera glycini)*, frogeye leaf spot *(Cercospora sojina)*, leptosphaerulina leaf spot *(Leptosphaerulina trifolii)*, phyllostica leaf spot *(Phyllosticta sojaecola)*, pod and stem blight *(Phomopsis sojae)*, powdery mildew *(Microsphaera diffusa)*, pyrenochaeta leaf spot *(Pyrenochaeta glycines)*, rhizoctonia aerial, foliage, and web blight *(Rhizoctonia solani)*, rust *(Phakopsora pachyrhizi, Phakopsora meibomiae)*, scab *(Sphaceloma glycines)*, stemphylium leaf blight *(Stemphylium botryosum)*, target spot *(Corynespora cassiicola)*.
Fungal diseases on roots and the stem base caused, for example, by black root rot *(Calonectria crotalariae)*, charcoal rot *(Macrophomina phaseolina)*, fusarium blight or wilt, root rot, and pod and collar rot *(Fusarium oxysporum, Fusarium orthoceras, Fusarium semitectum, Fusarium equiseti)*, mycoleptodiscus root rot *(Mycoleptodiscus terrestris)*, neocosmospora *(Neocosmospora vasinfecta)*, pod and stem blight *(Diaporthephaseolorum)*, stem canker *(Diaporthephaseolorum var. caulivora)*, phytophthora rot *(Phytophthora megasperma)*, brown stem rot *(Phialophora gregata)*, pythium rot *(Pythium aphanidermatum, Pythium irregulare, Pythium debaryanum, Pythium myriotylum, Pythium ultimum)*, rhizoctonia root rot, stem decay, and damping-off *(Rhizoctonia solani)*, sclerotinia stem decay *(Sclerotinia sclerotiorum)*, sclerotinia southern blight *(Sclerotinia rolfsii)*, thielaviopsis root rot *(Thielaviopsis basicola)*.
Preferably, the active compound combination according to the present invention allows excellent powdery mildew control.
Therefore, in a particular preferred embodiment diseases of plants or crops that can be controlled by the method according to the invention are diseases caused by powdery mildew pathogens, for example *Blumeria* species, for example *Blumeria graminis; Podosphaera* species, for example *Podosphaera leucotricha; Sphaerotheca* species, for example *Sphaerotheca fuliginea; Uncinula* species, for example *Uncinula necator; Microsphaera* species, for example *Microsphaera diffusa; Leveillula species,* for example *Leveillula taurica; Erysiphe* species, for example *Erysiphe cichoracearum*
Particularly preferred, the active ingredient combinations or compositions according to the invention are suitable for controlling the following plant diseases:
*Blumeria* (old name: *Erysiphe) graminis* (powdery mildew) on cereals (e.g. wheat or barley); *Erysiphe* spp. (powdery mildew) on sugar beet *(E. betae)*, vegetables (e.g. *E. pisi)*, such as cucumber, gourd, muskmelon (cantaloupe), pumpkin, and squash species (e.g. *E. cichoracearum)* and cabbage species, such as red cabbage, broccoli, brussels sprouts, cauliflower (e.g. *E. cruciferarum)*; and tomato *(Erysiphe lycopersici),* and pepper, eggplant, artischoke *(Leveillula taurica), Microsphaera diffusa (powdery mildew)* on soybeans; *Podosphaera* spp. (powdery mildew) on Rosaceae, hops, pomaceaus fruit and soft fruit, *e.g. P. leucotricha* on apple; *Uncinula* (syn. *Erysiphe) necator (powdery* mildew, anamorph: *Oidium tuckeri)* on grapevines; *Sphaerotheca fuliginea* (powdery mildew) on cucumber species.

In addition to such excellent control of diseases caused by powdery mildew pathogens active compound combination or compositions comprising bixafen are particularly suitable for controlling diseases caused by rust disease pathogens. Such active compound combination or compositions comprising bixafen are active compound combination or compositions comprising (A) cyflufenamid and (B) bixafen or active compound combination or compositions comprising (A) cyflufenamid and (B) bixafen and (C) prothioconazole. Such combinations or compositions are not according to the present invention but for reference only. Such active compound combination or compositions comprising bixafen are particularly suitable for controlling the following diseases caused by rust disease pathogens: *Gymnosporangium* species, for example *Gymnosporangium sabinae; Phakopsora* species, for example *Phakopsora pachyrhizi* and *Phakopsora meibomiae; Puccinia* species, for example *Puccinia recondita, P. triticina, P. graminis, P. hordei, P. coronata* or *P. striiformis; Uromyces* species, for example *Uromyces appendiculatus.*

The active compound combination or compositions according to the invention comprising cyflufenamid and spiroxamine are also particularly suitable for controlling diseases on cereals.

Such active compound combination or compositions according to the invention comprising comprising cyflufenamid and bixafen or cyflufenamid and spiroxamine are particularly suitable for controlling the following diseases on cereals, in particular on wheat or barley:

*Mycosphaerella* species, for example *Mycosphaerella graminicola* (synonym *Septoria tritici), Puccinia* species, for example *Puccinia recondite, P. triticina, P. graminis* or *P. striiformis; Leptosphaeria* species, for example *Leptosphaeria nodorum; Pyrenophora* species, for example *Pyrenophora teres, Pyrenophora tritici repentis, Pyrenophora graminea; Ramularia* species, for example *Ramularia collo-cygni, Gaeumannomyces* species, for example *Gaeumannomyces graminis; Fusarium* species, for example *Fusarium culmorum; Gibberella* species, for example *Gibberella zeae; Monographella* species, for example *Monographella nivalis; Septoria* species, for example *Septoria nodorum; Cochliobolus* species, caused for example by *Cochliobolus sativus;* (Conidiaform: Drechslera, Bipolaris Syn: Helminthosporium) *Rhynchosporium* species, for example *Rhynchosporium secalis.*

In addition to such excellent control of diseases caused by powdery mildew pathogens the active compound combination or compositions according to the invention comprising prothioconazole are particularly suitable for controlling diseases on cereals. Such active compound combination or compositions according to the invention comprising prothioconazole are active compound combination or compositions comprising (A) cyflufenamid and (B) spiroxamine and (C) prothioconazole. Such active compound combination or compositions according to the invention comprising prothioconazole are particularly suitable for controlling the following diseases on cereals, in particular on wheat or barley:

*Mycosphaerella* species, for example *Mycosphaerella graminicola* (synonym *Septoria tritici), Puccinia* species, for example *Puccinia recondite, P. triticina, P. graminis* or *P. striiformis; Leptosphaeria* species, for example *Leptosphaeria nodorum; Pyrenophora* species, for example *Pyrenophora teres, Pyrenophora tritici repentis, Pyrenophora graminea; Ramularia* species, for example *Ramularia collo-cygni, Gaeumannomyces* species, for example *Gaeumannomyces graminis; Fusarium* species, for example *Fusarium culmorum; Gibberella* species, for example *Gibberella zeae; Monographella* species, for example *Monographella nivalis; Septoria* species, for example *Septoria nodorum; Cochliobolus* species, caused for example by *Cochliobolus sativus;* (Conidiaform: Drechslera, Bipolaris Syn: Helminthosporium) *Rhynchosporium* species, for example *Rhynchosporium secalis.*

With the active compound combination or compositions according to the invention comprising prothioconazole in particular improved control of *Mycosphaerella* species, for example *Mycosphaerella graminicola* (synonym *Septoria tritici*) can be obtained.

The active compound combination or compositions according to the invention allow a broadening of the spectrum of fungicidal activity to other phytopathogens against the individual compounds are less effective or totally ineffective: Additionally, although achieving adequate fungicidal control a reduction in the rate of application of the active ingredients can be achieved by the active compound combination or compositions according to the invention. Such reduction in the rate of application of the individual active ingredients reduces the risk of resistances against such individual active ingredients.

The method of treatment according to the invention also provides the use or application of compounds (A) and (B) in a simultaneous, separate or sequential manner. If the single active ingredients are applied in a sequential manner, i.e. at different times, they are applied one after the other within a reasonably short period, such as a few hours or days. Preferably the order of applying the compounds (A) and (B)) is not essential for working the present invention.

When using active ingredients as fungicides, the application rates can be varied within a relatively wide range, depending on the kind of application. The application rate of the inventive active ingredients is generally and advantageously

- in the case of treatment of plant parts, for example leaves: from 0.1 to 10 000 g/ha, preferably from 10 to 1000 g/ha, more preferably from 10 to 800 g/ha, even more preferably from 50 to 300 g/ha (in the case of application by watering or dripping, it is even possible to reduce the application rate, especially when inert substrates such as rock-wool or perlite are used);

- in the case of seed treatment: from 2 to 200 g per 100 kg of seed, preferably from 3 to 150 g per 100 kg of seed, more preferably from 2.5 to 25 g per 100 kg of seed, even more preferably from 2.5 to 12.5 g per 100 kg of seed;

- in the case of soil treatment: from 0.1 to 10 000 g/ha, preferably from 1 to 5000 g/ha.

In case of treatment of plant parts the application rate of the inventive active ingredients is preferably

- from 5 to 50 g/ha cyflufenamid (compound (A)), more preferably from 5 to 30 g/ha cyflufenamid, most preferably from 5 to 20 g/ha cyflufenamid;

- from 100 to 300 g/ha spiroxamine (compound (B)), more preferably from 150 to 280 g/ha spiroxamine, most preferably from 180 to 270 g/ha spiroxamine;

- It is particularly preferred that the application rate for spiroxamine (compound (B)) is below 300 g/ha, more preferably lower that 275 g/ha.

*Treatment of seeds*

The combinations or compositions of the invention are particularly suitable for the treatment of seeds.

A large part of the damage to crop plants caused by harmful organisms is triggered by the infection of the seed during storage or after sowing, and also during and after germination of the plant. This phase is particularly critical since the roots and shoots of the growing plant are particularly sensitive, and even minor damage may result in the death of the plant. There is therefore a great interest in protecting the seed and the germinating plant by using appropriate compositions.

The control of phytopathogenic fungi by treating the seed of plants has been known for a long time and is the subject of constant improvements. However, the treatment of seed entails a series of problems which cannot always be solved in a satisfactory manner. For instance, it is desirable to develop methods for protecting the seed and the germinating plant, which dispense with, or at least significantly reduce, the additional deployment of crop protection compositions after planting or after emergence of the plants. It is also desirable to optimize the amount of the active ingredient used so as to provide the best possible protection for the seed and the germinating plant from attack by phytopathogenic fungi, but without damaging the plant itself by the active ingredient employed. In particular, methods for the treatment of seed should also take account of the intrinsic fungicidal properties of transgenic plants in order to achieve optimal protection of the seed and the germinating plant with a minimum expenditure of crop protection compositions.

The present invention therefore also discloses a method for protection of seed and germinating plants from attack by phytopathogenic fungi, by treating the seed with an inventive composition. The invention likewise discloses the use of the inventive compositions for treatment of seed to protect the seed and the germinating plant from phytopathogenic fungi. The invention further discloses seed which has been treated with an inventive composition for protection from phytopathogenic fungi.

The control of phytopathogenic fungi which damage plants post-emergence is effected primarily by treating the soil and the above-ground parts of plants with crop protection compositions. Owing to the concerns regarding a possible influence of the crop protection compositions on the environment and the health of humans and animals, there are efforts to reduce the amount of active ingredients deployed.

One of the advantages of the present invention is that the particular systemic properties of the inventive compositions mean that treatment of the seed with these active ingredients and compositions not only protects the seed itself, but also the resulting plants after emergence, from phytopathogenic fungi. In this way, the immediate treatment of the crop at the time of sowing or shortly thereafter can be dispensed with.

It is likewise considered to be advantageous that the inventive compositions can especially also be used with transgenic seed, in which case the plant growing from this seed is capable of expressing a protein which acts against pests. By virtue of the treatment of such seed with the inventive compositions, merely the expression of the protein, for example an insecticidal protein, can control certain pests. Surprisingly, a further synergistic effect can be observed in this case, which additionally increases the effectiveness for protection against attack by pests.

The inventive compositions are suitable for protecting seed of any plant variety which is used in agriculture, in greenhouses, in forests or in horticulture and viticulture. In particular, this is the seed of cereals (such as wheat, barley, rye, triticale, sorghum/millet and oats), maize, cotton, soya beans, rice, potatoes, sunflower, bean, coffee, beet (for example sugar beet and fodder beet), peanut, oilseed rape, poppy, olive, coconut, cocoa, sugar cane, tobacco, vegetables (such as tomato, cucumbers, onions and lettuce), turf and ornamentals (see also below). The treatment of the seed of cereals (such as wheat, barley, rye, triticale and oats), maize and rice is of particular significance.

As also described below, the treatment of transgenic seed with the inventive active ingredients or compositions is of particular significance. This relates to the seed of plants containing at least one heterologous gene. Definition and examples of suitable heterologous genes are given below.

In the context of the present invention, the inventive composition is applied to the seed alone or in a suitable formulation. Preferably, the seed is treated in a state in which it is sufficiently stable for no damage to occur in the course of treatment. In general, the seed can be treated at any time between harvest and sowing. It is customary to use seed which has been separated from the plant and freed from cobs, shells, stalks, coats, hairs or the flesh of the fruits. For example, it is possible to use seed which has been harvested, cleaned and dried down to a moisture content of less than 15 % by weight. Alternatively, it is also possible to use seed which, after drying, for example, has been treated with water and then dried again.

When treating the seed, care must generally be taken that the amount of the inventive composition applied to the seed and/or the amount of further additives is selected such that the germination of the seed is not impaired, or that the resulting plant is not damaged. This has to be borne in mind in particular in the case of active ingredients which can have phytotoxic effects at certain application rates.

The inventive compositions can be applied directly, i.e. without containing any other components and without having been diluted. In general, it is preferable to apply the compositions to the seed in the form of a suitable formulation. Suitable formulations and methods for seed treatment are known to those skilled in the art and are described, for example, in the following documents: US 4,272,417, US 4,245,432, US 4,808,430, US 5,876,739, US 2003/0176428 A1, WO 2002/080675, WO 2002/028186.

The active ingredients usable in accordance with the invention can be converted to the customary seed dressing formulations, such as solutions, emulsions, suspensions, powders, foams, slurries or other coating compositions for seed, and also ULV formulations.

These formulations are prepared in a known manner, by mixing the active ingredients with customary additives, for example customary extenders and also solvents or diluents, dyes, wetting agents, dispersants, emulsifiers, antifoams, preservatives, secondary thickeners, adhesives, gibberellins and also water.

Useful dyes which may be present in the seed dressing formulations usable in accordance with the invention are all dyes which are customary for such purposes. It is possible to use either pigments, which are sparingly soluble in water, or dyes, which are soluble in water. Examples include the dyes known by the names Rhodamine B, C.I. Pigment Red 112 and C.I. Solvent Red 1.

Useful wetting agents which may be present in the seed dressing formulations usable in accordance with the invention are all substances which promote wetting and which are conventionally used for the formulation of active agrochemical ingredients. Preference is given to using alkyl naphthalenesulphonates, such as diisopropyl or diisobutyl naphthalenesulphonates.

Useful dispersants and/or emulsifiers which may be present in the seed dressing formulations usable in accordance with the invention are all nonionic, anionic and cationic dispersants conventionally used for the formulation of active agrochemical ingredients. Usable with preference are nonionic or anionic dispersants or mixtures of nonionic or anionic dispersants. Suitable nonionic dispersants include especially ethylene oxide/propylene oxide block polymers, alkylphenol polyglycol ethers and tristryrylphenol polyglycol ether, and the phosphated or sulphated derivatives thereof. Suitable anionic dispersants are especially lignosulphonates, polyacrylic acid salts and arylsulphonate/formaldehyde condensates.

Antifoams which may be present in the seed dressing formulations usable in accordance with the invention are all foam-inhibiting substances conventionally used for the formulation of active agrochemical ingredients. Silicone antifoams and magnesium stearate can be used with preference.

Preservatives which may be present in the seed dressing formulations usable in accordance with the invention are all substances usable for such purposes in agrochemical compositions. Examples include dichlorophene and benzyl alcohol hemiformal.

Secondary thickeners which may be present in the seed dressing formulations usable in accordance with the invention are all substances usable for such purposes in agrochemical compositions. Preferred examples include cellulose derivatives, acrylic acid derivatives, xanthan, modified clays and finely divided silica.

Adhesives which may be present in the seed dressing formulations usable in accordance with the invention are all customary binders usable in seed dressing products. Preferred examples include polyvinylpyrrolidone, polyvinyl acetate, polyvinyl alcohol and tylose.

The gibberellins which may be present in the seed dressing formulations usable in accordance with the invention may preferably be gibberellins A1, A3 (= gibberellic acid), A4 and A7; particular preference is given to using gibberellic acid. The gibberellins are known (cf. R. Wegler "Chemie der Pflanzenschutz- und Schädlingsbekämpfungsmittel" [Chemistry of the Crop Protection Compositions and Pesticides], vol. 2, Springer Verlag, 1970, p. 401-412).

The seed dressing formulations usable in accordance with the invention can be used, either directly or after previously having been diluted with water, for the treatment of a wide range of different seed, including the seed of transgenic plants. In this case, additional synergistic effects may also occur in interaction with the substances formed by expression.

For treatment of seed with the seed dressing formulations usable in accordance with the invention, or the preparations prepared therefrom by adding water, all mixing units usable customarily for the seed dressing are useful. Specifically, the procedure in the seed dressing is to place the seed into a mixer, to add the particular desired amount of seed dressing formulations, either as such or after prior dilution with water, and to mix everything until the formulation is distributed homogeneously on the seed. If appropriate, this is followed by a drying process.

According to another aspect of the present invention, in the combination or composition according to the invention, the compound ratio A/B may be advantageously chosen so as to produce a synergistic effect. A synergistic effect of fungicides is always present when the fungicidal activity of the active compound combinations exceeds the total of the activities of the active compounds when applied individually. The expected activity for a given combination of two or three active compounds can be calculated as follows (cf. Colby, S.R., "Calculating Synergistic and Antagonistic Responses of Herbicide Combinations", Weeds 1967, 15, 20-22).

The latter article mentions the formula for combinations of 2 active compounds:

$$E_1 = X + Y - \frac{X \cdot Y}{100}$$

and the formula for a combination of 3 active compounds:

$$E_2 = X + Y + Z - \frac{X \cdot Y - X \cdot Z - Y \cdot Z}{100} + \frac{X \cdot Y \cdot Z}{10000}$$

wherein

X      denotes the efficacy when using active compound A at an application rate of $\underline{m}$ ppm (or g/ha),
Y      denotes the efficacy when using active compound B (or C) at an application rate of $\underline{n}$ ppm (or g/ha),
Z      denotes the efficacy when using active compound C at an application rate of $\underline{r}$ ppm (or g/ha),
$E_1$      denotes the efficacy when using active compounds A and B at application rates of $\underline{m}$ and $\underline{n}$ ppm (or g/ha), and
$E_2$      denotes the efficacy when using active compounds A and B and C at application rates of $\underline{m}$ and $\underline{n}$ and $\underline{r}$ ppm (or g/ha),

The term "synergistic effect" also means the effect defined by application of the Tammes method, "Isoboles, a graphic representation of synergism in pesticides", Netherlands Journal of Plant Pathology, 70(1964), pages 73-80.

Here, the efficacy is determined in %. 0 % means an efficacy which corresponds to that of the control, whereas an efficacy of 100 % means that no infection is observed.

If the actual <u>fungicidal</u> action exceeds the calculated value, the action of the combination is superadditive, i.e. a synergistic effect is present. In this case, the actually observed efficacy must exceed the value calculated using the above formula for the expected efficacy ($E_1$ or $E_2$).

The invention is illustrated by the following examples.

**Examples**

The advanced fungicidal activity of the active compound combinations according to the invention is evident from the example below. While the individual active compounds exhibit weaknesses with regard to the fungicidal activity, the combinations have an activity which exceeds a simple addition of activities.

A synergistic effect of fungicides is always present when the fungicidal activity of the active compound combinations exceeds the total of the activities of the active compounds when applied individually. The expected activity for a given combination of two active compounds can be calculated as follows (cf. Colby, S.R., "Calculating Synergistic and Antagonistic Responses of Herbicide Combinations", Weeds 1967, 15, 20-22):

If

X is the efficacy when active compound A is applied at an application rate of m ppm (or g/ha),

Y is the efficacy when active compound B is applied at an application rate of n ppm (or g/ha),

Z is the efficacy when active compound B is applied at an application rate of r ppm (or g/ha),

$E_1$ is the efficacy when the active compounds A and B are applied at application rates of m and n ppm (or g/ha), respectively, and

$E_2$ is the efficacy when the active compounds A, B and C are applied at application rates of m, n and r ppm (or g/ha), respectively, and
then

$$E_1 = X + Y - \frac{X \cdot Y}{100}$$

and for a ternary mixture:

$$E_2 = X + Y + Z - \left( \frac{X \cdot Y + X \cdot Z + Y \cdot Z}{100} \right) + \frac{X \cdot Y \cdot Z}{10000}$$

The degree of efficacy, expressed in % is denoted. 0 % means an efficacy which corresponds to that of the control while an efficacy of 100 % means that no disease is observed.

If the actual fungicidal activity exceeds the calculated value, then the activity of the combination is superadditive, i.e. a synergistic effect exists. In this case, the efficacy which was actually observed must be greater than the value for the expected efficacy (E) calculated from the abovementioned formula.

A further way of demonstrating a synergistic effect is the method of Tammes (cf. "Isoboles, a graphic representation of synergism in pesticides" in Neth. J. Plant Path., 1964, 70, 73-80).

The invention is illustrated by the following examples.

### Example 1: *in vivo* preventive *Leptosphaeria nodorum* test (wheat)

| Solvent: | 49 | parts by weight of N,N-dimethylacetamide |
| Emulsifier: | 1 | part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application.

After the spray coating has been dried, the plants are sprayed with a spore suspension of *Leptosphaeria nodorum.* The plants remain for 48 hours in an incubation cabinet at approximately 20°C and a relative atmospheric humidity of approximately 100%.

The plants are placed in the greenhouse at a temperature of approximately 25°C and a relative atmospheric humidity of approximately 80%.

The test is evaluated 8 days after the inoculation. 0% means an efficacy which corresponds to that of the untreated control, while an efficacy of 100% means that no disease is observed.

**Table 1: *in vivo* preventive *Leptosphaeria nodorum* test (wheat)**

| Known combination : | Rate of application of active compound in ppm | Efficacy in % |
|---|---|---|
| Proquinazid + Cyflufenamid [for reference only] | 200 + 20 | 0 |
| Combination according to the invention: | | |
| Spiroxamine + Cyflufenamid | 200 + 20 | 71 |

### Example 2: *in vivo* preventive *Pyrenophora teres* test (barley) [for reference only]

| Solvent: | 49 | parts by weight of N,N-dimethylacetamide |
| Emulsifier: | 1 | part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application.

After the spray coating has been dried, the plants are sprayed with a spore suspension of *Pyrenophora teres.* The plants remain for 48 hours in an incubation cabinet at approximately 20°C and a relative atmospheric humidity of approximately 100%.

The plants are placed in the greenhouse at a temperature of approximately 20°C and a relative atmospheric humidity of approximately 80%.

The test is evaluated 8 days after the inoculation. 0% means an efficacy which corresponds to that of the untreated control, while an efficacy of 100% means that no disease is observed.

**Table 2: *in vivo* preventive *Pyrenophora teres* test (barley)**

| Known combination : | Rate of application of active compound in ppm | Efficacy in % |
|---|---|---|
| Proquinazid + Cyflufenamid | 200 + 20 | 25 |
| | | |
| Bixafen + Cyflufenamid | 200 + 20 | 94 |

**Example 3: *in vivo* preventive *Fusarium nivale* (var. majus) test (wheat)**

| | | |
|---|---|---|
| Solvent: | 49 | parts by weight of N,N-dimethylacetamide |
| Emulsifier: | 1 | part by weight of alkylaryl polyglycol ether |

To produce a suitable preparation of active compound, 1 part by weight of active compound or active compound combination is mixed with the stated amounts of solvent and emulsifier, and the concentrate is diluted with water to the desired concentration.

To test for preventive activity, young plants are sprayed with the preparation of active compound or active compound combination at the stated rate of application.

After the spray coating has been dried, the plants are slightly injured by using a sandblast and afterwards they are sprayed with a conidia suspension of *Fusarium nivale (var. majus).*

The plants are placed in the greenhouse under a translucent incubation cabinet at a temperature of approximately 10 °C and a relative atmospheric humidity of approximately 100%.

The test is evaluated 5 days after the inoculation. 0% means an efficacy which corresponds to that of the untreated control, while an efficacy of 100% means that no disease is observed.

The table below clearly shows that the observed activity of the active compound combination according to the invention is greater than the calculated activity, i.e. a synergistic effect is present.

**Table 3: *in vivo* preventive *Fusarium nivale* (var. majus) test (wheat)**

| Active compounds | Application rate of active compound in ppm a.i. | Efficacy in % found* | calc. ** |
|---|---|---|---|
| (A-1) prothioconazole | 320 | 86 | |
| (B-1) spiroxamine | 400 | 71 | |
| (C-1) cyflufenamid | 20 | 43 | |
| (A-1) + (B-1) + (C-1) 16:20:1 | 320 + 400 + 20 | 100 | 98 |
| * found = activity found<br>** calc. = activity calculated using Colby's formula | | | |

Example 1 and 2 show a surprisingly better efficacy of the binary mixtures cyflufenamid and bixafen as well as cyflufenamid and spiroxamine according to the present invention than the mixture cyflufenamid and proquinazid known from the prior art. Surprisingly, the mixtures cyflufenamid and bixafen not according to the invention as well as cyflufenamid and spiroxamine according to the present invention provide a significantly broader spectrum of fungicidal activity than the mixture cyflufenamid and proquinazid which is known as a mixture controlling powdery mildew diseases.

Additionally, the ternary mixture of cyflufenamid, spiroxamine and prothioconazole even shows a better efficacy over the expected calculated efficacy of the sole active ingredients.

## Claims

1. Active compound combination comprising

    (A) cyflufenamid
    and
    (B) spiroxamine,

    wherein the weight ratio of A:B from 1:10 to 1:30.

2. A composition comprising a combination according to claim 1.

3. A composition according to claim 2 further comprising adjuvants, solvents, carrier, surfactants or extenders.

## Patentansprüche

1. Wirkstoffkombination, umfassend

    (A) Cyflufenamid
    und
    (B) Spiroxamin,

    wobei das Gewichtsverhältnis von A:B 1:10 bis 1:30 beträgt.

2. Zusammensetzung, umfassend eine Kombination nach Anspruch 1.

3. Zusammensetzung nach Anspruch 2, weiterhin umfassend Adjuvanzien, Lösungsmittel, Träger, Tenside oder Streckmittel.

## Revendications

1. Combinaison de composés actifs comprenant

    (A) du cyflufenamid
    et
    (B) de la spiroxamine,

    le rapport pondéral de A:B étant de 1:10 à 1:30.

2. Composition comprenant une combinaison selon la revendication 1.

3. Composition selon la revendication 2, comprenant en outre des adjuvants, des solvants, des vecteurs, des tensioactifs ou des extenseurs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 805148 A1
- WO 03070705 A
- EP 0281842 A
- WO 9616048 A
- WO 2005034628 A
- WO 2007110173 A
- EP 0627163 A
- EP 0833561 A
- EP 0831702 A
- WO 0137666 A
- WO 9847367 A
- WO 03073850 A
- WO 03073851 A
- WO 03073852 A
- CN 102308808
- US 4272417 A
- US 4245432 A
- US 4808430 A
- US 5876739 A
- US 20030176428 A1
- WO 2002080675 A
- WO 2002028186 A

### Non-patent literature cited in the description

- RESEARCH DISCLOSURE. MASON PUBLICATIONS, 01 March 2007, vol. 515, 251
- Chemie der Pflanzenschutz- und Schädlingsbekämpfungsmittel. **R. WEGLER.** Chemistry of the Crop Protection Compositions and Pesticides. Springer Verlag, 1970, vol. 2, 401-412
- **COLBY, S.R.** Calculating Synergistic and Antagonistic Responses of Herbicide Combinations. *Weeds,* 1967, vol. 15, 20-22
- Isoboles, a graphic representation of synergism in pesticides. *Netherlands Journal of Plant Pathology,* 1964, vol. 70, 73-80
- Isoboles, a graphic representation of synergism in pesticides. *Neth. J. Plant Path.,* 1964, vol. 70, 73-80